# EUROPÄISCHE PATENTSCHRIFT

(11) **EP 3 142 906 B1**
(45) Veröffentlichungstag und Bekanntmachung des Hinweises auf die Patenterteilung: **03.01.2018**
(21) Anmeldenummer: 15711103.0
(22) Anmeldetag: 12.03.2015
(51) Int. Cl.: B60T 8/36

(54) **HYDRAULIKBLOCK FÜR EIN HYDRAULIKAGGREGAT EINER SCHLUPFREGELUNG EINER HYDRAULISCHEN FAHRZEUGBREMSANLAGE**
HYDRAULIC BLOCK FOR A HYDRAULIC ASSEMBLY OF A SLIP CONTROL SYSTEM OF A HYDRAULIC VEHICLE BRAKE SYSTEM
BLOC HYDRAULIQUE POUR GROUPE HYDRAULIQUE DE RÉGULATEUR DE PATINAGE D'UN SYSTÈME DE FREINAGE HYDRAULIQUE DE VÉHICULE

(30) Priorität: 12.05.2014 DE 102014208871
(43) Veröffentlichungstag der Anmeldung: 22.03.2017
(73) Patentinhaber: Robert Bosch GmbH, 70442 Stuttgart (DE)
(72) Erfinder: MAYR, Matthias, 87549 Rettenberg (DE); WEH, Andreas, 87477 Sulzberg (DE)
(86) Internationale Anmeldenummer: PCT/EP2015/055185
(87) Internationale Veröffentlichungsnummer: WO 2015/172908

(56) Entgegenhaltungen:
- WO-A1-2009/047099
- DE-A1-102005 046 630
- DE-A1-102007 054 697
- DE-A1-102011 087 809
- DE-A1-102012 209 218

## Beschreibung

Die Erfindung betrifft einen Hydraulikblock für ein Hydraulikaggregat einer Schlupfregelung einer hydraulischen Fahrzeugbremsanlage mit den Merkmalen des Oberbegriffs des Anspruchs 1.

### Stand der Technik

Die Offenlegungsschrift DE 10 2012 209 218 A1 offenbart eine schlupfgeregelte hydraulische Fahrzeugbremsanlage mit einem Hydraulikaggregat, das einen Hydraulikblock aufweist, der mit hydraulischen Bauelementen der Schlupfregelung bestückt ist. Solche hydraulischen Bauelemente sind Magnetventile, Rückschlagventile, Hydropumpen, Hydrospeicher, Dämpferkammern und Drosseln. Der Hydraulikblock dient einer mechanischen Befestigung und hydraulischen Verschaltung der hydraulischen Bauelemente der Schlupfregelung. Der Hydraulikblock der bekannten Fahrzeugbremsanlage ist ein quaderförmiger flacher Block aus Metall, beispielsweise aus einer Aluminiumlegierung. In dem Hydraulikblock sind Aufnahmen für die hydraulischen Bauelemente angebracht, die als durchmessergestufte Sacklöcher ausgeführt sind, in die die hydraulischen Bauelemente gesteckt, gepresst oder in sonstiger Weise eingebaut und beispielsweise durch eine Verstemmung befestigt werden. Durch eine Verbohrung des Hydraulikblocks sind Leitungen hergestellt, die überwiegend parallel zu Kanten des Hydraulikblocks, d. h. kartesisch, verlaufen und die Aufnahmen bzw. die in sie eingebauten hydraulischen Bauelemente hydraulisch miteinander verschalten. Ein mit den hydraulischen Bauelementen der Schlupfregelung bestückter Hydraulikblock kann als Hydraulikaggregat aufgefasst werden. Der Hydraulikblock bzw. das Hydraulikaggregat ist über Bremsleitungen an einen Hauptbremszylinder angeschlossen und hydraulische Radbremsen sind über Bremsleitungen an das Hydraulikaggregat bzw. den Hydraulikblock angeschlossen.

Für eine Schlupfregelung mit zwölf Magnetventilen, nämlich vier Bremsdruckaufbauventilen, vier Bremsdruckabsenkventilen, zwei Trennventilen und zwei Ansaugventilen, weist der bekannt Hydraulikblock Aufnahmen für die Magnetventile in drei zueinander parallelen Reihen für je vier Ventile nebeneinander auf. In einer ersten Reihe befinden sich die Aufnahmen für die Bremsdruckaufbauventile, in einer zweiten Reihe die Aufnahmen für die Bremsdruckabsenkventile und in einer dritten Reihe die Aufnahmen für die Trennventile und die Ansaugventile. Die Bremsdruckaufbauventile werden auch als Einlassventile und die Bremsdruckabsenkventile auch als Auslassventile bezeichnet.

Die Offenlegungsschrift DE 10 2011 087 809 A1 offenbart eine schlupfgeregelte hydraulische Fahrzeugbremsanlage mit Bremskreisdrucksensoren an Druckseiten von Innenzahnradpumpen als Hydropumpen der Fahrzeugbremsanlage in jedem Bremskreis. Aufnahmen für die Bremskreisdrucksensoren sind in der selben Flachseite eines Hydraulikblocks angebracht, in der auch Aufnahmen für Magnetventile der Schlupfregelung der Fahrzeugbremsanlage angebracht sind, und zwar auf einer Aufnahmen für Bremsdruckabsenkventile abgewandten Seite von Aufnahmen für Trennventile und für Ansaugventile. Die Aufnahmen für die Bremskreisdrucksensoren der bekannten Fahrzeugbremsanlage sind durch eine Verbindungsleitung an Aufnahmen für Rückschlagventile angeschlossen, die ihrerseits an eine Aufnahme für die Innenzahnradpumpen angeschlossen sind. Die Aufnahmen für die Rückschlagventile sind in Längsseiten des Hydraulikblocks der bekannten Fahrzeugbremsanlage angebracht.

### Offenbarung der Erfindung

Der erfindungsgemäße Hydraulikblock mit den Merkmalen des Anspruchs 1 weist eine Aufnahme für einen Bremskreisdrucksensor auf, der zum Messen eines Drucks in einem Bremskreis einer hydraulischen Fahrzeugbremsanlage, die eine Schlupfregelung aufweist, dient. Die Aufnahme für den Bremskreisdrucksensor ist auf einer den Aufnahmen für die Bremsdruckabsenkventile abgewandten Seite der Aufnahmen für die Trennventile oder die Ansaugventile angeordnet. Mit anderen Worten: die Aufnahme für den Bremskreisdrucksensor ist außerhalb der drei Reihen der Aufnahmen für die Magnetventile, und zwar auf der Seite der dritten Reihe mit den Aufnahmen für die Trennventile und die Ansaugventile angeordnet. Die Aufnahme für den Bremskreisdrucksensor kommuniziert mit einer Verbindungsleitung, die von einer Aufnahme für ein Trennventil zu einer Aufnahme für ein Bremsdruckaufbauventil führt. Die Verbindungsleitung ist eine im Hydraulikblock angebrachte Bohrung oder in anderer Weise hergestellt, die hier zu ihrer eindeutigen Bezeichnung als Verbindungsleitung bezeichnet wird.

Die Verbindungsleitung erstreckt sich aus Richtung der Aufnahme für das Bremsdruckaufbauventil gesehen über die Aufnahme für ein Trennventil hinweg. Auf einer der Aufnahme für das Bremsdruckaufbauventil abgewandten Seite der Aufnahme für das Trennventil mündet eine Vertikalleitung in die Verbindungsleitung, die die Aufnahme für den Bremskreisdrucksensor mit der Verbindungsleitung verbindet. Die Vertikalleitung ist ebenfalls eine im Hydraulikblock angebrachte Bohrung oder in anderer Weise als durch Bohren hergestellt. Sie wird hier als Vertikalleitung bezeichnet, weil sie vorzugsweise senkrecht zu Flachseiten des Hydraulikblocks verläuft. Die Bezeichnung als Vertikalleitung dient ebenfalls der eindeutigen Bezeichnung. Sie verläuft vertikal, wenn der Hydraulikblock mit horizontalen Flachseiten angeordnet ist.

Die Unteransprüche haben vorteilhafte Ausgestaltungen und Weiterbildungen der im Anspruch 1 angegebenen Erfindung zum Gegenstand.

Eine Weiterbildung der Erfindung sieht eine Querleitung vor, die in die Vertikalleitung mündet und die Aufnahme für den Bremskreisdrucksensor mit der Vertikalleitung verbindet. Die Bezeichnung als Querleitung beruht darauf, dass die Querleitung normalerweise senkrecht zu einer Längsmittelebene des Hydraulikblocks verläuft. Sie dient ebenfalls der eindeutigen Bezeichnung der Leitung und soll ebenso wie die anderen Leitungsbezeichnungen nicht einschränkend verstanden werden.

Vorzugsweise weist der erfindungsgemäße Hydraulikblock für jeden Bremskreis eine Aufnahme für einen Bremskreisdrucksensor mit jeweils einer Verbindungsleitung auf, d. h. zwei Aufnahmen für zwei Bremskreisdrucksensoren und zwei Verbindungsleitungen.

### Kurze Beschreibung der Zeichnung

Die Erfindung wird nachfolgend anhand einer Ausführungsform näher erläutert. Es zeigen:
- Figur 1: einen Hydraulikschaltplan einer schlupfgeregelten hydraulischen Fahrzeugbremsanlage;
- Figur 2: einen Hydraulikblock gemäß der Erfindung in perspektivischer Darstellung mit Blick auf eine Ventilseite; und
- Figur 3: den Hydraulikblock aus Figur 2 in perspektivischer Darstellung mit Blick auf eine Motorseite.

Weitere Merkmale der Erfindung ergeben sich aus der folgenden Beschreibung einer Ausführungsform der Erfindung in Verbindung mit den Ansprüchen und der Zeichnung. Die einzelnen Merkmale können je für sich oder zu mehreren in beliebiger Kombination bei Ausführungsformen der Erfindung verwirklicht sein.

### Ausführungsform der Erfindung

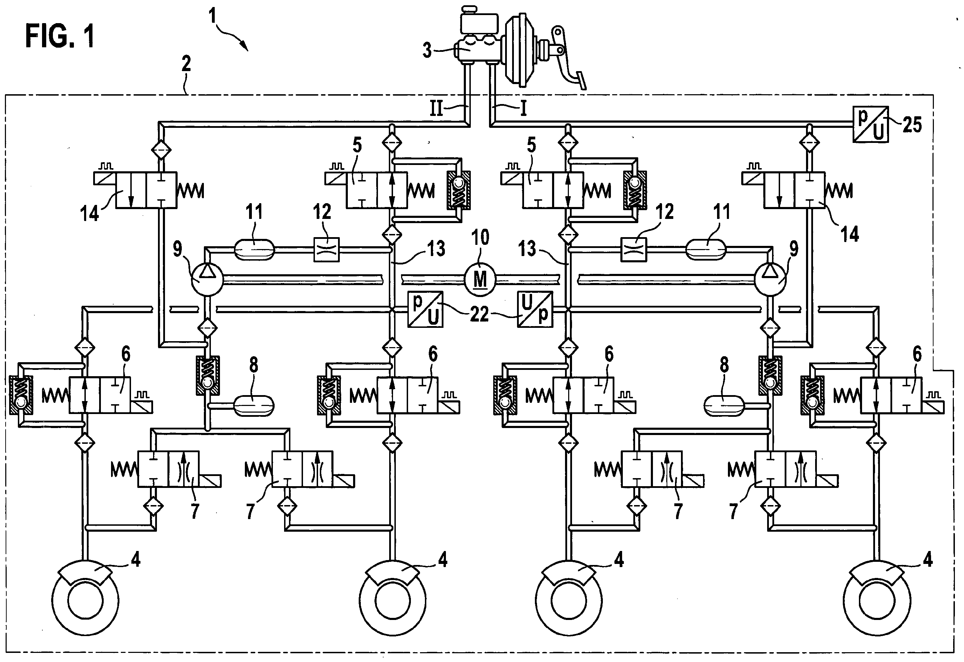

Die in Figur 1 gezeigte, schlupfgeregelte hydraulische Zweikreis-Fahrzeugbremsanlage 1 weist ein Hydraulikaggregat 2, einen Zweikreis-Hauptbremszylinder 3, an den das Hydraulikaggregat 2 angeschlossen ist, und Radbremsen 4, die an das Hydraulikaggregat 2 angeschlossen sind, auf. Das Hydraulikaggregat 2 umfasst die im folgenden Absatz aufgeführten hydraulischen Bauelemente einer Schlupfregelung der Fahrzeugbremsanlage 1.

Jeder Bremskreis I, II der Fahrzeugbremsanlage 1 ist über ein Trennventil 5 an den Hauptbremszylinder 3 angeschlossen. Die Radbremsen 4 sind über Bremsdruckaufbauventile 6 an die Trennventile 5 angeschlossen. Über Bremsdruckabsenkventile 7 ist in jedem Bremskreis I, II ein Hydrospeicher 8 und eine Saugseite einer Hydropumpe 9 an die Radbremsen 4 angeschlossen. Die beiden Hydropumpen 9, die oft auch als Rückförderpumpen bezeichnet werden, werden gemeinsam von einem Elektromotor 10 angetrieben. An die Druckseiten der Hydropumpen sind Dämpferkammern 11 angeschlossen, die durch Drosseln 12 an Verbindungsleitungen 13 angeschlossen sind, die die Trennventile 5 und die Bremsdruckaufbauventile 6 verbinden. Außerdem weist die Fahrzeugbremsanlage 1 in jedem Bremskreis I, II ein Ansaugventil 14 auf, das die Saugseiten der Hydropumpen 9 mit dem Hauptbremszylinder 3 verbindet. Aufbau und Funktion solcher schlupfgeregelter Fahrzeugbremsanlagen 1 sind bekannt und sollen hier nicht näher erläutert werden. Die Bremsdruckaufbauventile 6, Bremsdruckabsenkventile 7, Trennventile 5 und Ansaugventile 14 sind Magnetventile.

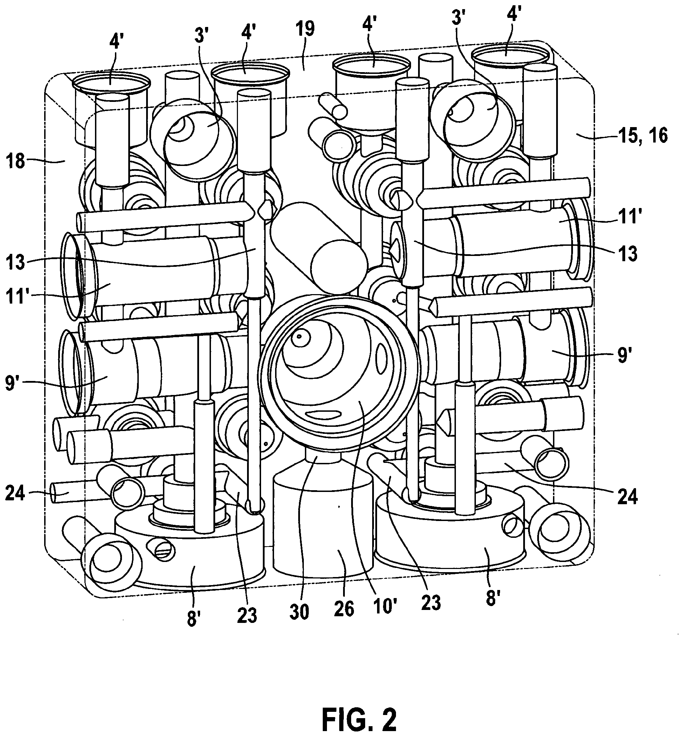

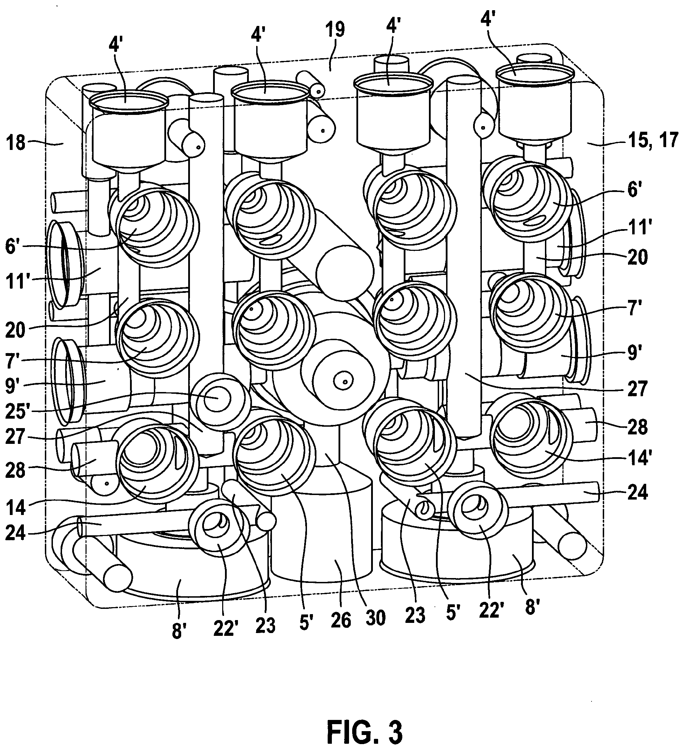

Die hydraulischen Bauelemente des Hydraulikaggregats 2 der Schlupfregelung der Fahrzeugbremsanlage 1 sind in einem Hydraulikblock 15 untergebracht, der in Figuren 2 und 3 gezeigt ist. Der Hydraulikblock 15 dient einer mechanischen Befestigung und einer hydraulischen Verschaltung der hydraulischen Bauelemente des Hydraulikaggregats 2 bzw. der Schlupfregelung der Fahrzeugbremsanlage 1. Es befinden sich hydraulische Teile der Bauelemente in Aufnahmen, Einbauräumen und dgl. des Hydraulikblocks 15, elektrotechnische- und elektromechanische Teile wie Spulen und Anker der Magnetventile stehen nach außen vom Hydraulikblock 15 ab. Der Elektromotor 10 zum Antrieb der Hydropumpen 9 ist außen an einer Flachseite des Hydraulikblocks 15 befestigt, die hier als Motorseite 16 bezeichnet wird. Der Hydraulikblock 15 ist durchsichtig und unbestückt gezeichnet, d.h. ohne die hydraulischen Bauelemente. Die Aufnahmen sind zylindrische, zum Teil durchmessergestufte Sacklöcher im Hydraulikblock 15. Zur hydraulischen Verschaltung sind Bohrungen als Verbindungsleitungen oder allgemein als Leitungen im Hydraulikblock 15 angebracht. Der Hydraulikblock 15 ist kartesisch verbohrt, d. h. die Aufnahmen, Einbauräume, Leitungen sind parallel oder rechtwinklig zueinander und zu den Seiten des Hydraulikblocks 15 gebohrt. Der Hydraulikblock 15 ist niedrig quaderförmig, seine Dicke beträgt ungefähr ein Viertel seiner Länge oder Breite, in Ansicht ist er nahezu quadratisch. Zur eindeutigen Bezeichnung und Unterscheidung werden die in Figur 2 zu sehende Flachseite des Hydraulikblocks 15 als Motorseite 16, die gegenüberliegende, in Figur 3 zu sehende Flachseite als Ventilseite 17 und die Seitenflächen als Längsseiten 18 und Querseiten 19 bezeichnet. Der Hydraulikblock 15 ist spiegelsymmetrisch zu einer gedachten Längsmittelebene, die parallel zu den Längsseiten 18 verläuft.

Der Hydraulikblock 15 weist an einer Querseite 19 vier Anschlüsse 4' für die Radbremsen 4 auf, die in einer Reihe nebeneinander angeordnet sind. "In einer Reihe" bedeutet, dass die Anschlüsse 4', Aufnahmen usw. auf einer gedachten geraden Linie nebeneinander angeordnet sind. Die Anschlüsse 4' sind zylindrische Sacklöcher, von denen mindestens eine Leitung 20 zu anderen Anschlüssen, Aufnahmen für Magnetventile, Einbauräumen für Hydropumpen, Hydrospeicher und/oder Dämpferkammern führt. Die Leitungen 20 sind Bohrungen im Hydraulikblock 15, die, wenn sie nicht von einem Anschluss, einer Aufnahme oder einem Einbauraum ausgehen, an einer Mündung an einer der Seiten 16, 17, 18, 19 des Hydraulikblocks 15 hermetisch dicht verschlossen sind, beispielsweise mit einer eingepressten Kugel. Die Anschlüsse 4' können Innengewinde für den Anschluss von Radbremsleitungen aufweisen oder zum Verstemmen, beispielsweise Crimpen zum Anschluss der Radbremsleitungen vorgesehen sein. An der Querseite 19 des Hydraulikblocks 15 angeordnet bedeutet, dass die Anschlüsse 4' an dieser Querseite 19 offen sind, so dass die Radbremsleitungen angeschlossen werden können. Bei den Einbauräumen für die Hydropumpen und Hydrospeicher bedeutet an einer Seite des Hydraulikblocks 15 angeordnet, dass die Einbauräume an dieser Seite des Hydraulikblocks 15 offen sind, so dass von dieser Seite aus die Hydropumpen oder Hydrospeicher eingesetzt bzw. eingebaut werden können. Entsprechendes gilt für die Aufnahmen der Magnetventile.

Mit einem Abstand von der Querseite 19 des Hydraulikblocks 15, der ungefähr einer Tiefe der Anschlüsse 4' für die Radbremsen 4 entspricht, sind an der Motorseite 16 des Hydraulikblocks 15 zwei Anschlüsse 3' für die beiden Bremskreise I, II des Hauptbremszylinders 3 angeordnet. Die Anschlüsse 3' für den Hauptbremszylinder 3 sind jeweils zwischen einem äußeren und einem inneren Anschluss 4' für die Radbremsen 4 angeordnet, wobei "außen" nahe einer Längsseite 18 und "innen" nahe der Längsmittelebene des Hydraulikblocks 15 bedeutet.

An die Anschlüsse 3' für den Hauptbremszylinder 3 anschließend sind vier Aufnahmen 6' für die Bremsdruckaufbauventile 6 in einer ersten Reihe nebeneinander auf der Ventilseite des Hydraulikblocks 15 angeordnet. Die Aufnahmen 6' für die Bremsdruckaufbauventile 6 sind durch die bereits genannten Leitungen 20 mit den Anschlüssen 4' für die Radbremsen 4 verbunden.

In einer zweiten Reihe parallel zu den Aufnahmen 6' für die Bremsdruckaufbauventile 6 sind auf einer den Anschlüssen 4' für die Radbremsen 4 abgewandten Seite der Aufnahmen 6' für die Bremsdruckaufbauventile 6 Anschlüsse 7' für die Bremsdruckabsenkventile 7 nebeneinander auf der Ventilseite 16 des Hydraulikblocks 15 angeordnet.

An die Aufnahmen 7' für die Bremsdruckabsenkventile 7 schließen sich Einbauräume 9' für die Hydropumpen 9 an, die an den Längsseiten 18 des Hydraulikblocks 15 angeordnet, d.h. offen sind und die parallel zu den Reihen der nebeneinander angeordneten Aufnahmen 6', 7' für die Bremsdruckaufbauventile 6 und die Bremsdruckabsenkventile 7 verlaufen. Die Einbauräume 9' für die Hydropumpen 9 sind ungefähr in einer mittleren Höhe zwischen der Motorseite 16 und der Ventilseite 17 angeordnet und reichen vergleichsweise tief in Richtung der Längsmitte des Hydraulikblocks 15 in den Hydraulikblock 15 hinein und münden nach zwei ihren Durchmesser verkleinernden Durchmesserstufungen radial in einen Exzenterraum 10' für einen hier nicht dargestellten Pumpenexzenter, der drehfest auf einer Welle des Elektromotors 10 angeordnet ist, der die als Kolbenpumpen ausgebildeten Hydropumpen 9 antreibt. Der Exzenterraum 10' ist an der Motorseite 16 des Hydraulikblocks 15 offen und befindet sich in der Längsmitte des Hydraulikblocks 15 zwischen den Einbauräumen 9' für die Hydropumpen 9. Der nicht dargestellte Elektromotor 10 wird außen auf der Motorseite 16 des Hydraulikblocks 15 koaxial zum Exzenterraum 10' befestigt.

In einer dritten Reihe parallel zu den Reihen der Aufnahmen 6', 7' für die Bremsdruckaufbauventile 6 und für die Bremsdruckabsenkventile 7 sind auf einer den Aufnahmen 6', 7' für die Bremsdruckaufbauventile 6 und Bremsdruckabsenkventile 7 abgewandten Seite der Einbauräume 9' für die Hydropumpen 9 vier Aufnahmen 5', 14' für die Trennventile 5 und die Ansaugventile 14 an der Ventilseite 16 des Hydraulikblocks 15 nebeneinander angeordnet. Die Aufnahmen 5' für die Trennventile 5 sind innen zwischen den außen angeordneten Aufnahmen 14' für die Ansaugventile 14 angeordnet.

An die dritte Reihe der Aufnahmen 5', 14' für die Trennventile 5 und die Ansaugventile 14 schließen sich zwei Einbauräume 8' für die Hydrospeicher 8 an. Die Einbauräume 8' sind an einer Querseite 19 des Hydraulikblocks 15 angeordnet, die der Querseite 19 gegenüberliegt, an der die Anschlüsse 4' für die Radbremsen 4 angeordnet sind.

Zwischen den beiden Reihen der Aufnahmen 6', 7' für die Bremsdruckaufbauventile 6 und die Bremsdruckabsenkventile 7 sind zwei Einbauräume 11' für die Dämpferkammern 11 angeordnet. Die Einbauräume 11' für die Dämpferkammern 11 sind an den Längsseiten 18 des Hydraulikblocks 15 angeordnet, d.h. sie sind dort für den Einbau der Dämpferkammern 11 offen, und sie verlaufen parallel zu den Reihen der Einbauräume 6', 7' für die Bremsdruckaufbauventile 6 und die Bremsdruckabsenkventile 7. Die Aufnahmen 6', 7' für die Bremsdruckaufbauventile 6 und die Bremsdruckabsenkventile 7 sind wie gesagt an der Ventilseite 16 des Hydraulikblocks 15 angeordnet. Die Einbauräume 11' für die Dämpferkammern 11 sind nahe der Motorseite 16 des Hydraulikblocks 15, von der Ventilseite 17 des Hydraulikblocks 15 aus gesehen also unter den Aufnahmen 6', 7' für die Bremsdruckaufbauventile 6 und die Bremsdruckabsenkventile 7 im Hydraulikblock 15 angeordnet.

In einem der beiden Bremskreise I ist ein Hauptbremszylinderdrucksensor 21 angeschlossen. In jedem der beiden Bremskreise I, II ist zwischen dem Trennventil 5 und den Bremsdruckaufbauventilen 6 ein Bremskreisdrucksensor 22 angeschlossen (Figur 1).

Im Hydraulikblock 15 sind die Verbindungsleitungen 13 Bohrungen parallel zu den Längsseiten 18, die von der Querseite 19 ausgehen, die die Anschlüsse 4' für die Radbremsen 4 aufweist. Die Verbindungsleitungen 13 verlaufen unter den inneren Aufnahmen 6' für die Bremsdruckaufbauventile 6 und den Aufnahmen 5' für die Trennventile 5 hindurch, d. h. zwischen einem Grund dieser Aufnahmen 6', 5' und der Motorseite 16, und setzen sich aus Richtung der Aufnahmen 6' für die Bremsdruckaufbauventile 6 gesehen über die Aufnahmen 5' für die Trennventile 5 fort. Senkrecht zur Motorseite 16 sind zwischen den Aufnahmen 8' für die Hydrospeicher 8 und den Aufnahmen 5' für die Trennventile 5 Vertikalleitungen 23 im Hydraulikblock 15 angebracht, die in Enden der Verbindungsleitungen 13 münden. Mündungen der Vertikalleitungen 23 an der Motorseite 16 des Hydraulikblocks 15 sind mit eingepressten Kugeln hermetisch druckdicht verschlossen. Von den Längsseiten 18 des Hydraulikblocks 15 führen Querleitungen 24 zu den Vertikalleitungen 23. Auch die Mündungen der Querleitungen 24 sind an den Längsseiten 18 des Hydraulikblocks 15 durch eingepresste Kugeln hermetisch druckdicht verschlossen. Mit den Querleitungen 24 kommunizieren Aufnahmen 22' für die Bremskreisdrucksensoren 22, die in der Ventilseite 17 des Hydraulikblocks 15 angebracht sind. Die Aufnahmen 22' für die Bremskreisdrucksensoren 22 lassen sich grundsätzlich an beliebiger Stelle der Querleitungen 24 anordnen. In der dargestellten Ausführungsform der Erfindung sind die Aufnahmen 22' für die Bremskreisdrucksensoren 22 in Querrichtung des Hydraulikblocks 17 gesehen zwischen den Aufnahmen 5' für die Trennventile 5 und den Aufnahmen 14' für die Ansaugventile 14 angeordnet. In Längsrichtung des Hydraulikblocks 15 gesehen befinden sich die Aufnahmen 22' für die Bremskreisdrucksensoren 22 außerhalb der drei Reihen Aufnahmen 6', 7', 5', 14' für die Bremsdruckaufbauventile 6, Bremsdruckabsenkventile 7, Trennventile 5 und Ansaugventile 14 auf der Seite der Aufnahmen 5', 14' für die Trennventile 5 und die Ansaugventile 14, d. h. die Aufnahmen 22' für die Bremskreisdrucksensoren 22 befinden sich in Längsrichtung des Hydraulikblocks 15 gesehen zwischen den Aufnahmen 5', 14' für die Trennventile 5 und Ansaugventile 14 einerseits und den Einbauräumen 8' für die Hydrospeicher 8 andererseits. In Querrichtung des Hydraulikblocks 15 gesehen lassen sich die Aufnahmen 22' für die Bremskreisdrucksensoren 22 auch im Bereich der Vertikalleitungen 23 anordnen, wodurch die Querleitungen 24 entfallen können (nicht dargestellt).

Anstelle des Exzenterraums 10' kann der Hydraulikblock 15 einen Einbauraum für zwei Innenzahnradpumpen aufweisen, die als Hydropumpen für die beiden Bremskreise I, II der Fahrzeugbremsanlage 1 an die Stelle der Kolbenpumpen treten (nicht dargestellt). Vom Exzenterraum 10' führt eine Leckageleitung 30 in der Längsmittelebene des Hydraulikblocks 17 zu der Querseite 19, die die Einbauräume 8' für die Hydrospeicher 8 aufweist. Die Leckageleitung 30 kann ins Freie münden oder, wie in der Ausführungsform, in einen Leckagespeicher 26. Die Leckageleitung 30 leitet etwaige Bremsflüssigkeit, die aus den Hydropumpen 9 aus- und in den Exzenterraum 10' einströmt, aus dem Exzenterraum 10' ab.

Von den beiden Anschlüssen 3' für die beiden Bremskreise I, II des Hauptbremszylinders 3 verlaufen Hauptbremszylinderleitungen 27 parallel zu den Längsseiten 18 des Hydraulikblocks 15 und nahe der Ventilseite 17 jeweils zwischen einer äußeren und einer inneren Aufnahme 6', 7' für die Bremsdruckaufbauventile 6 und die Bremsdruckabsenkventile 7 hindurch bis zwischen die Aufnahmen 5', 14' für die Trennventile 5 und die Ansaugventile 14, mit denen die Hauptbremszylinderleitungen 27 durch Querleitungen 28 verbunden ist. In der Ventilseite 17 des Hydraulikblocks 15 ist auf einer Seite des Hydraulikblocks 15 zwischen einer inneren und einer äußeren Aufnahme 7' für die Bremsdruckabsenkventile 7 und den Aufnahmen 5', 14' für ein Trennventil 5 und ein Ansaugventil 14 eine Aufnahme 25' für den Hauptbremszylinderdrucksensor 25 angeordnet. Die Aufnahme 15' ist über bzw. auf der Hauptbremszylinderleitung 27 angeordnet und kommuniziert mit diese, so dass Hauptbremszylinderdruck in einem Bremskreis I gemessen werden kann. Möglich allerdings nicht vorgesehen sind Aufnahmen 25' für Hauptbremszylinderdrucksensoren 25 für beide Bremskreise I, II.

In der Längsmitte zwischen zwei inneren Aufnahmen 6' für die Bremsdruckaufbauventile 6 und zwei inneren Aufnahmen 7' für Bremsdruckabsenkventile 7 weist der Hydraulikblock 15 ein von der Motorseite 16 zur Ventilseite 17 durchgehendes Durchgangsloch als Durchführung 29 zu einem elektrischen Anschluss des Elektromotors 10 auf. Die Durchführung 29 ermöglicht den elektrischen Anschluss des Elektromotors 10 auf derselben Seite, nämlich der Ventilseite 17 des Hydraulikblocks 15, auf der sich die Magnetventile 5, 6, 7, 14 befinden. Dadurch befinden sich alle elektrischen Anschlüsse des Hydraulikaggregats 2 auf derselben Seite des Hydraulikblocks 15.

## Patentansprüche

1. Hydraulikblock für ein Hydraulikaggregat (2) einer Schlupfregelung einer hydraulischen Fahrzeugbremsanlage (1), mit einer ersten Reihe Aufnahmen (6') für Bremsdruckaufbauventile (6), einer zweiten Reihe Aufnahmen (7') für Bremsdruckabsenkventile (7), einer dritten Reihe Aufnahmen (5', 14') für Trennventile (5) und Ansaugventile (14), einer Aufnahme (22') für einen Bremskreisdrucksensor (22), die auf einer den Aufnahmen (7') für die Bremsdruckabsenkventile (7) abgewandten Seite der Aufnahmen (5', 14') für die Trennventile (5) und die Ansaugventile (14) angeordnet ist, und einer Verbindungsleitung (13), die von der Aufnahme (5') für ein Trennventil (5) zu einer Aufnahme (6') für ein Bremsdruckaufbauventil (6) führt, wobei aus Richtung der Aufnahmen (6') für die Bremsdruckaufbauventile (6) gesehen die Verbindungsleitung (13) über die Aufnahmen (5') für die Trennventile (5) hinweg verläuft und wobei dort eine senkrecht zu einer die Aufnahmen (5', 6', 7', 14') für die Ventile (5, 6, 7, 14) aufweisenden Seite (17) des Hydraulikblocks (15) verlaufende Vertikalleitung (23) in die Verbindungsleitung (13) mündet, durch die die Aufnahme (22') für den Bremskreisdrucksensor (22) mit der Verbindungsleitung (13) kommuniziert.

2. Hydraulikblock nach Anspruch 1, **dadurch gekennzeichnet, dass** der Hydraulikblock (15) eine Querleitung (24) aufweist, die senkrecht zu einer Längsmittelebene des Hydraulikblocks (15) verläuft und in die Vertikalleitung (23) mündet und dass die Aufnahme (22') für den Bremskreisdrucksensor (22) durch die Querleitung (24) und die Vertikalleitung (23) mit der Verbindungsleitung (13) kommuniziert.

3. Hydraulikblock nach Anspruch 1, **dadurch gekennzeichnet, dass** der Hydraulikblock (15) einen Exzenterraum (10') für einen Exzenter zum Antrieb zweier Hydropumpen (9) aufweist, der in einer Längsmitte des Hydraulikblocks (15) angeordnet ist und dass vom Exzenterraum (10') eine Leckageleitung (30) zu einer Außenseite (19) des Hydraulikblocks (15) führt.

4. Hydraulikblock nach Anspruch 3, **dadurch gekennzeichnet, dass** der Exzenterraum (10') zwischen der zweiten und der dritten Reihe Aufnahmen (7', 5', 14') für die Bremsdruckaufbauventile (7), die Trennventile (5) und die Ansaugventile (14) angeordnet ist.

5. Hydraulikblock nach Anspruch 3, **dadurch gekennzeichnet, dass** die Leckageleitung (30) in der Längsmitte des Hydraulikblocks (15) verläuft.

6. Hydraulikblock nach Anspruch 1, **dadurch gekennzeichnet, dass** der Hydraulikblock (15) einen Anschluss (3') für einen Hauptbremszylinder (3) aufweist, von dem eine Hauptbremszylinderleitung (27) zwischen zwei Aufnahmen (6') für Bremsdruckaufbauventile (6) und zwei Aufnahmen (7') für Bremsdruckabsenkventile (7) bis zwischen die Aufnahmen (5', 14') für die Trennventile (5) und die Ansaugventile (14) durchführt, und dass der Hydraulikblock (15) eine Aufnahme (25') für einen Hauptbremszylinderdrucksensor (25) zwischen zwei Aufnahmen (7') für Bremsdruckabsenkventile (7) und den Aufnahmen (5', 14') für die Trennventile (5) und Ansaugventile (14) aufweist, die durch eine Querleitung (28) mit der Hauptbremszylinderleitung (27) kommuniziert.

## Claims

1. Hydraulic block for a hydraulic assembly (2) of a slip control system of a hydraulic vehicle brake system (1), with a first row of receptacles (6') for brake pressure build-up valves (6), a second row of receptacles (7') for brake pressure reducing valves (7), a third row of receptacles (5', 14') for isolating valves (5) and intake valves (14), a receptacle (22') for a brake circuit pressure sensor (22) that is disposed on a side of the receptacles (5', 14') for the isolating valves (5) and the intake valves (14) facing away from the receptacles (7') for the brake pressure reducing valves (7), and a connecting line (13) that leads from the receptacle (5') for an isolating valve (5) to a receptacle (6') for a brake pressure build-up valve (6), wherein, when viewed from the direction of the receptacles (6') for the brake pressure build-up valves (6), the connecting line (13) runs across the receptacles (5') for the isolating valves (5) and wherein at that point a vertical line (23), extending perpendicularly to a side (17) of the hydraulic block (15) comprising the receptacles (5', 6', 7', 14') for the valves (5, 6, 7, 14), opens into the connecting line (13), by means of which the receptacle (22') for the brake circuit pressure sensor (22) communicates with the connecting line (13).

2. Hydraulic block according to Claim 1, **characterized in that** the hydraulic block (15) comprises a transverse line (24) that extends perpendicularly to a longitudinal center plane of the hydraulic block (15) and opens into the vertical line (23) and that the receptacle (22') for the brake circuit pressure sensor (22) communicates with the connecting line (13) by means of the transverse line (24) and the vertical line (23).

3. Hydraulic block according to Claim 1, **characterized in that** the hydraulic block (15) comprises an eccentric space (10') for an eccentric element for driving two hydraulic pumps (9) that is disposed in a longitudinal center of the hydraulic block (15) and that a leakage line (30) leads from the eccentric space (10') to an external side (19) of the hydraulic block (15).

4. Hydraulic block according to Claim 3, **characterized in that** the eccentric space (10') is disposed between the second and the third row receptacles (7', 5', 14') for the brake pressure build-up valves (7), the isolating valves (5) and the intake valves (14).

5. Hydraulic block according to Claim 3, **characterized in that** the leakage line (30) runs in the longitudinal center of the hydraulic block (15).

6. Hydraulic block according to Claim 1, **characterized in that** the hydraulic block (15) comprises a connection (3') for a master brake cylinder (3), from which a master brake cylinder line (27) passes through between two receptacles (6') for brake pressure build-up valves (6) and two receptacles (7') for brake pressure reducing valves (7) to between the receptacles (5', 14') for the isolating valves (5) and the intake valves (14), and that the hydraulic block (15) comprises a receptacle (25') for a master brake cylinder pressure sensor (25) between two receptacles (7') for brake pressure reducing valves (7) and the receptacles (5', 14') for the isolating valves (5) and intake valves (14), which communicates with the master brake cylinder line (27) by means of a transverse line (28).

## Revendications

1. Bloc hydraulique pour un groupe hydraulique (2) d'une régulation de patinage d'une installation de frein hydraulique de véhicule (1), comprenant une première rangée de logements (6') pour des soupapes d'augmentation de la pression de freinage (6), une deuxième rangée de logements (7') pour des soupapes de réduction de la pression de freinage (7), une troisième rangée de logements (5', 14') pour des soupapes de coupure (5) et des soupapes d'aspiration (14), un logement (22') pour un capteur de pression de circuit de freinage (22) qui est disposé sur un côté des logements (5', 14') pour les soupapes de coupure (5) et les soupapes d'aspiration (14) opposé aux logements (7') pour les soupapes de réduction de la pression de freinage (7), et une conduite de liaison (13) qui conduit depuis le logement (5') pour une soupape de coupure (5) jusqu'à un logement (6') pour une soupape d'augmentation de la pression de freinage (6), la conduite de liaison (13), vue depuis la direction des logements (6') pour les soupapes d'augmentation de la pression de freinage (6), s'étendant au-delà des logements (5') pour les soupapes de coupure (5) et une conduite verticale (23) s'étendant perpendiculairement à un côté (17) du bloc hydraulique (15) présentant les logements (5', 6', 7', 14') pour les soupapes (5, 6, 7, 14) y débouchant dans la conduite de liaison (13), par le biais de laquelle le logement (22') pour le capteur de pression de circuit de freinage (22) communique avec la conduite de liaison (13).

2. Bloc hydraulique selon la revendication 1, **caractérisé en ce que** le bloc hydraulique (15) présente une conduite transversale (24) qui s'étend perpendiculairement à un plan médian longitudinal du bloc hydraulique (15) et débouche dans la conduite verticale (23) et **en ce que** le logement (22') pour le capteur de pression de circuit de freinage (22) communique par le biais de la conduite transversale (24) et de la conduite verticale (23) avec la conduite de liaison (13).

3. Bloc hydraulique selon la revendication 1, **caractérisé en ce que** le bloc hydraulique (15) présente un espace d'excentrique (10') pour un excentrique pour l'entraînement de deux pompes hydrauliques (9), qui est disposé dans un milieu longitudinal du bloc hydraulique (15) et **en ce qu'**une conduite de fuite (30) conduit depuis l'espace d'excentrique (10') jusqu'à un côté extérieur (19) du bloc hydraulique (15).

4. Bloc hydraulique selon la revendication 3, **caractérisé en ce que** l'espace d'excentrique (10') est disposé entre la deuxième et la troisième rangée de logements (7', 5', 14') pour les soupapes d'augmentation de la pression de freinage (7), les soupapes de coupure (5) et les soupapes d'aspiration (14).

5. Bloc hydraulique selon la revendication 3, **caractérisé en ce que** la conduite de fuite (30) s'étend dans le milieu longitudinal du bloc hydraulique (15).

6. Bloc hydraulique selon la revendication 1, **caractérisé en ce que** le bloc hydraulique (15) présente un raccordement (3') pour un maître-cylindre de frein (3), depuis lequel une conduite de maître-cylindre de frein (27) passe entre des logements (6') pour les soupapes d'augmentation de la pression de freinage (6) et deux logements (7') pour des soupapes de réduction de la pression de freinage (7) jusqu'entre les logements (5', 14') pour les soupapes de coupure (5) et les soupapes d'aspiration (14), et **en ce que** le bloc hydraulique (15) présente un logement (25') pour un capteur de pression de maître-cylindre de frein (25) entre deux logements (7') pour des soupapes de réduction de la pression de freinage (7) et les logements (5', 14') pour les soupapes de coupure (5) et les soupapes d'aspiration (14), qui communique par une conduite transversale (28) avec la conduite de maître-cylindre de frein (27).
